# EUROPÄISCHE PATENTSCHRIFT

(11) **EP 2 692 455 B1**
(45) Veröffentlichungstag und Bekanntmachung des Hinweises auf die Patenterteilung: **24.06.2015**
(21) Anmeldenummer: 12178805.3
(22) Anmeldetag: 01.08.2012
(51) Int. Cl.: B21D 37/14, B21D 37/04, B23Q 3/155

(54) **Werkzeugmaschine zum Bearbeiten von plattenartigen Werkstücken, insbesondere von Blechen**
Tool machine for processing sheet-shaped workpieces, in particular sheet metal
Machine-outil pour l'usinage de pièces en forme de plaque, notamment de tôles

(43) Veröffentlichungstag der Anmeldung: 05.02.2014
(73) Patentinhaber: TRUMPF Werkzeugmaschinen GmbH + Co. KG, 71254 Ditzingen (DE)
(72) Erfinder: Klinkhammer, Marc, 71254 Ditzingen (DE); Kerscher, Stefan, 75045 Walzbachtal (DE)
(74) Vertreter: Kohler Schmid Möbus Patentanwälte

(56) Entgegenhaltungen:
- EP-A1- 1 733 840
- EP-A1- 2 198 991
- EP-A2- 0 377 865
- DE-A1- 19 500 614
- DE-A1-102010 003 511
- US-A- 5 224 915
- US-A- 5 882 285

## Beschreibung

Die Erfindung betrifft eine Werkzeugmaschine zum Bearbeiten von plattenartigen Werkstücken, insbesondere von Blechen,
- mit einem Maschinengestell, das einen unteren Gestellschenkel sowie einen oberen Gestellschenkel aufweist, wobei sich der untere Gestellschenkel und der obere Gestellschenkel mit ihrer Längsrichtung in Längsrichtung des Maschinengestells erstrecken und unter Ausbildung eines Gestellinnenraumes in vertikaler Richtung voneinander beabstandet sind,
- mit einer Bearbeitungsstation, an welcher ein Bearbeitungswerkzeug für die Werkstückbearbeitung ein- und auswechselbar ist,
- mit einem wenigstens teilweise in dem Gestellinnenraum des Maschinengestells angeordneten stationsnahen Werkzeugmagazin mit Lagerplätzen für an der Bearbeitungsstation ein- und auswechselbare Bearbeitungswerkzeuge, wobei das stationsnahe Werkzeugmagazin und die Bearbeitungsstation relativ zueinander bewegbar sind und dadurch einzuwechselnde Bearbeitungswerkzeuge der Bearbeitungsstation zuführbar und/oder auszuwechselnde Bearbeitungswerkzeuge von der Bearbeitungsstation abführbar sind,
- mit einem stationsfernen Werkzeugmagazin mit Lagerplätzen für an der Bearbeitungsstation ein- und auswechselbare Bearbeitungswerkzeuge, wobei die Lagerplätze auf einer Magazinplattform des stationsfernen Werkzeugmagazins vorgesehen sind, welche gegenüber dem Maschinengestell seitlich in horizontaler Richtung vorsteht und welche von oben zugänglich ist sowie
- mit einer Werkzeugtransfervorrichtung, mittels derer an der Bearbeitungsstation ein- und auswechselbare Bearbeitungswerkzeuge zwischen dem stationsfernen Werkzeugmagazin und dem stationsnahen Werkzeugmagazin transferierbar sind und die einen Werkzeughalter aufweist, wobei zum Transfer von an der Bearbeitungsstation ein- und auswechselbaren Bearbeitungswerkzeugen zwischen dem stationsfernen Werkzeugmagazin und dem stationsnahen Werkzeugmagazin der Werkzeughalter der Werkzeugtransfervorrichtung einerseits und das stationsferne Werkzeugmagazin und/oder das stationsnahe Werkzeugmagazin andererseits relativ zueinander mit einer Werkzeugtransferbewegung in Längsrichtung des Maschinengestells bewegbar sind und wobei mittels des Werkzeughalters der Werkzeugtransfervorrichtung an der Bearbeitungsstation ein- und auswechselbare Bearbeitungswerkzeuge von den Lagerplätzen des stationsfernen Werkzeugmagazins und von den Lagerplätzen des stationsnahen Werkzeugmagazins entnehmbar oder an die Lagerplätze des stationsfernen Werkzeugmagazins und an die Lagerplätze des stationsnahen Werkzeugmagazins übergebbar sind.

Eine derartige Werkzeugmaschine ist bekannt aus US 5,882,285 A. Diese Druckschrift offenbart eine Revolverstanzpresse mit einem Maschinenrahmen, innerhalb dessen ein oberer Werkzeugrevolver und ein unterer Werkzeugrevolver in vertikaler Richtung gegeneinander versetzt angeordnet sind. Nahe der Revolverstanzpresse ist ein Werkzeugwechsler vorgesehen. Der Werkzeugwechsler ist Teil eines Werkzeuglager- und -wechselsystems, das zusätzlich zu dem Werkzeugwechsler mehrere Werkzeugmagazine aufweist. Die Werkzeugmagazine sind gleichfalls neben der Revolverstanzpresse angeordnet. Mittels des Werkzeugwechslers des Werkzeuglager- und -wechselsystems werden Stanzwerkzeuge zwischen einem der Werkzeugmagazine einerseits und dem oberen Werkzeugrevolver sowie dem unteren Werkzeugrevolver andererseits transferiert. Zu diesem Zweck ist der Werkzeugwechsler mit einer Tragstruktur versehen, die mit Abstand von dem Maschinenrahmen der Revolverstanzpresse aufgestellt ist und an der ein Werkzeuggreifer für Stanzstempel sowie ein Werkzeuggreifer für Stanzmatrizen heb- und senkbar und außerdem um eine vertikale Achse schwenkbeweglich gelagert sind. Mit entsprechenden Vertikal- und entsprechenden Schwenkbewegungen werden von den Werkzeuggreifern Stanzstempel an dem betreffenden Werkzeugmagazin und an dem oberen Werkzeugrevolver sowie dem unteren Werkzeugrevolver entnommen bzw. eingesetzt. Damit die Werkzeuggreifer auf verschiedene Werkzeug-Lagerplätze an dem betreffenden Werkzeugmagazin und dem oberen Werkzeugrevolver sowie dem unteren Werkzeugrevolver zugreifen können, werden das Werkzeugmagazin und der obere Werkzeugrevolver sowie der untere Werkzeugrevolver jeweils mit einer Drehbewegung um eine vertikale Achse zugestellt.

Weiterer Stand der Technik ist offenbart in DE 195 00 614 A1 und in EP 0 648 556 A1.

Gemäß DE 195 00 614 A1 weist eine Oberstempel- und Unterstempelaustauschvorrichtung einer Revolverstanzvorrichtung einen mit Greifvorrichtungen versehenen Oberstempelwechselarm und einen gleichfalls mit Greifvorrichtungen versehenen Unterstempelwechselarm auf, die beide innerhalb einer Öffnung eines Portalrahmens der Revolverstanzvorrichtung angeordnet und dort um eine mittels einer Stütze definierte vertikale Achse drehbar gelagert sind.

EP 0 648 556 A1 offenbart eine Revolverstanzpresse für die Blechbearbeitung mit einem O-förmigen Maschinengestell. In dem Gestellinnenraum sind eine Koordinatenführung für die zu bearbeitenden Bleche sowie ein Werkzeugrevolver untergebracht. Der Werkzeugrevolver ist um eine vertikale Achse drehbar und entlang seines Umfanges mit einer Mehrzahl von Lagerplätzen für Stanzwerkzeuge versehen. Durch eine Zustellbewegung des Werkzeugrevolvers um die vertikale Drehachse wird dasjenige Stanzwerkzeug, welches für die auszuführende Werkstückbearbeitung benötigt wird, an einer Bearbeitungsstation der Revolverstanzpresse positioniert. Eine Werkzeugtransfervorrichtung bestückt die Lagerplätze des Werkzeugrevolvers mit den für die anstehende Werkstückbearbeitung benötigten Stanzwerkzeugen. Nicht mehr benötigte Stanzwerkzeuge werden durch die Werkzeugtransfervorrichtung von den Lagerplätzen des Werkzeugrevolvers entnommen, benötigte Stanzwerkzeuge werden von der Werkzeugtransfervorrichtung an die Lagerplätze des Werkzeugrevolvers übergeben. Dabei fährt die Werkzeugtransfervorrichtung zusätzlich zu dem Werkzeugrevolver ein von diesem beabstandetes Werkzeugmagazin an, aus welchem die Werkzeugtransfervorrichtung die dem Werkzeugrevolver zuzuführenden Stanzwerkzeuge entnimmt und in welchem die Werkzeugtransfervorrichtung die aus dem Werkzeugrevolver entnommenen Stanzwerkzeuge abstellt. Die für die Stanzwerkzeuge vorgesehenen Lagerplätze des Werkzeugmagazins sind in einer zu einer Längsseite des Maschinengestells hin offenen Gestellkammer untergebracht. Die Werkzeugtransfervorrichtung verfährt in Längsrichtung des Maschinengestells zwischen einer Position, in welcher sie vor der seitlichen Öffnung der Gestellkammer angeordnet ist und einer Position, in welcher sie sich auf Höhe eines an dem Werkzeugrevolver vorgesehenen Lagerplatzes für ein Stanzwerkzeug befindet. Zur Übernahme bzw. zur Übergabe eines Stanzwerkzeuges greift die Werkzeugtransfervorrichtung in horizontaler Richtung in den betreffenden Lagerplatz an dem Werkzeugrevolver oder in den betreffenden Lagerplatz an dem Werkzeugmagazin ein. Bei der Verfahrbewegung längs des Maschinengestells ist die Werkzeugtransfervorrichtung an horizontal verlaufenden und senkrecht zu einer Längsseitenwand des Maschinengestells gegeneinander versetzten Führungsschienen geführt.

Den gattungsgemäßen Stand der Technik konstruktiv zu vereinfachen, ist Aufgabe der vorliegenden Erfindung.

Erfindungsgemäß gelöst wird diese Aufgabe durch die Werkzeugmaschine gemäß Patentanspruch 1.

Das stationsferne Werkzeugmagazin der beanspruchten Werkzeugmaschine weist eine gegenüber dem Maschinengestell seitlich in horizontaler Richtung vorstehende und von oben zugängliche Magazinplattform mit Lagerplätzen für an der Bearbeitungsstation ein- und auswechselbare Bearbeitungswerkzeuge auf. Im Falle der Erfindung ist oberhalb der Magazinplattform die Werkzeugtransfervorrichtung an der betreffenden Längsseite des Maschinengestells angebracht. Die Magazinplattform erfindungsgemäßer Werkzeugmaschinen ist demnach an der Außenseite des Maschinengestells vorgesehen und dort für den darüber angeordneten Werkzeughalter der Werkzeugtransfervorrichtung gut zugänglich. Die Anordnung der Magazinplattform und der Werkzeugtransfervorrichtung an der Außenseite des Maschinengestells eröffnet insbesondere die Möglichkeit, vorhandene Werkzeugmaschinen, die über kein stationsfernes Werkzeugmagazin verfügen, ohne großen Aufwand mit einem derartigen Werkzeugmagazin nachzurüsten.

Zum Transfer von Bearbeitungswerkzeugen zwischen dem stationsfernen Werkzeugmagazin und dem stationsnahen Werkzeugmagazin muss eine Werkzeugtransferbewegung in Längsrichtung des Maschinengestells ausgeführt werden. Bei dieser Werkzeugtransferbewegung handelt es sich um eine Relativbewegung zwischen dem Werkzeughalter der Werkzeugtransfervorrichtung einerseits und dem stationsfernen Werkzeugmagazin und/oder dem stationsnahen Werkzeugmagazin andererseits.

Zur Ausführung der Werkzeugtransferbewegung kann der Werkzeughalter der Werkzeugtransfervorrichtung an dem Maschinengestell in dessen Längsrichtung in eine stationsferne Übernahme-/Übergabeposition an dem stationsfernen Werkzeugmagazin und in eine stationsnahe Übernahme-/Übergabeposition an dem stationsnahen Werkzeugmagazin bewegt werden. Vorteilhafterweise ist mit dem Werkzeughalter der Werkzeugtransfervorrichtung lediglich eine geringe Masse zu bewegen. Dieser Umstand bringt insbesondere eine hohe Positioniergenauigkeit beim Anfahren der Übernahme-/Übergabepositionen an dem stationsfernen Werkzeugmagazin und an dem stationsnahen Werkzeugmagazin mit sich. Außerdem lässt sich die Werkzeugtransferbewegung mittels verhältnismäßig leistungsarmer und folglich kostengünstiger Antriebe realisieren.

Ergänzend oder alternativ ist vorgesehen, dass das stationsnahe Werkzeugmagazin und/oder die Magazinplattform des stationsfernen Werkzeugmagazins mit einer Werkzeugtransferbewegung längs des Maschinengestells bewegbar ist bzw. sind. Insbesondere kann der Werkzeughalter der Werkzeugtransfervorrichtung mit dem Maschinengestell fest verbunden sein. Das stationsnahe Werkzeugmagazin bzw. die Magazinplattform des stationsfernen Werkzeugmagazins übernimmt wenigstens einen Teil der Werkzeugtransferbewegung. Diese Möglichkeit zur Erzeugung der Werkzeugtransferbewegung bietet sich insbesondere in Fällen an, in denen das stationsnahe Werkzeugmagazin ohnehin in Längsrichtung des Maschinengestells bewegbar ist. Dies ist beispielsweise dann der Fall, wenn das stationsnahe Werkzeugmagazin in eine Koordinatenführung für die zu bearbeitenden Werkstücke integriert ist. Übernimmt das ohnehin mit einem Antrieb versehene stationsnahe Werkzeugmagazin die Werkzeugtransferbewegung zwischen dem stationsfernen Werkzeugmagazin und dem stationsnahen Werkzeugmagazin vollständig, so ist für den Werkzeugtransfer kein gesonderter Antrieb erforderlich.

Besondere Ausführungsarten der Werkzeugmaschine nach Patentanspruch 1 ergeben sich aus den abhängigen Patentansprüchen 2 bis 9.

Erfindungsgemäß kann das stationsferne Werkzeugmagazin einschließlich der Magazinplattform grundsätzlich als von dem Maschinengestell der Werkzeugmaschine getrennte Baueinheit ausgeführt sein. Im Falle der Erfindung bevorzugt wird aber eine mit dem Maschinengestell verbundene Magazinplattform (Patentanspruch 2). Aufgrund der Verbindung ist die Magazinplattform dauerhaft definiert gegenüber den übrigen Funktionseinheiten der Werkzeugmaschine, insbesondere auch gegenüber der Werkzeugtransfervorrichtung, angeordnet. Dieser Umstand erleichtert insbesondere eine positionsgenaue Relativbewegung von Magazinplattform und Werkzeugtransfervorrichtung.

Für die Gestaltung des stationsnahen Werkzeugmagazins bestehen erfindungsgemäß verschiedene Möglichkeiten. Im Falle der bevorzugten Erfindungsbauart nach Patentanspruch 3 weist das stationsnahe Werkzeugmagazin einen wenigstens teilweise in dem Gestellinnenraum des Maschinengestells angeordneten und sich quer zu der Längsrichtung des Maschinengestells erstreckenden horizontalen Träger auf, an welchem in Längsrichtung des Trägers nebeneinanderliegende Lagerplätze für Bearbeitungswerkzeuge vorgesehen sind. Die Lagerplätze eines derartigen Linearmagazins sind für die Werkzeugtransfervorrichtung gut zugänglich. Damit alle längs des horizontalen Trägers angeordneten Lagerplätze für die Werkzeugtransfervorrichtung erreichbar sind, müssen der horizontale Träger und die Werkzeugtransfervorrichtung in Längsrichtung des horizontalen Trägers relativ zueinander beweglich sein. Bevorzugtermaßen ist zu diesem Zweck der horizontale Träger des Linearmagazins in seiner Längsrichtung beweglich an dem Maschinengestell geführt.

Gemäß Patentanspruch 4 ist in Weiterbildung der Erfindung vorgesehen, dass die Magazinplattform des stationsfernen Werkzeugmagazins aktiv eine Werkzeugtransferbewegung ausführt, die zweckmäßigerweise mittels des verfahrbaren stationsnahen Werkzeugmagazins erzeugt wird.

Kann die Magazinplattform des stationsfernen Werkzeugmagazins für die Werkzeugtransferbewegung an das ohnehin angetriebene stationsnahe Werkzeugmagazin lösbar angekuppelt werden (Patentanspruch 5), so lässt sich die Anbindung der Magazinplattform an das stationsnahe Werkzeugmagazin auf diejenigen Fälle beschränken, in denen eine Werkzeugtransferbewegung auszuführen ist. Bei anderweitigen Bewegungen muss die Magazinplattform von dem stationsnahen Werkzeugmagazin nicht mitbewegt werden.

Ausweislich Patentanspruch 6 wird die von dem stationsnahen Werkzeugmagazin entkoppelte Magazinplattform des stationsfernen Werkzeugmagazins in weiterer bevorzugter Ausgestaltung der Erfindung in einer Ruheposition abseits der Übernahme-/Übergabeposition angeordnet. Auf diese Art und Weise ist sichergestellt, dass das momentan ungenutzte stationsferne Werkzeugmagazin die sonstigen Abläufe an der erfindungsgemäßen Werkzeugmaschine nicht behindert.

Im Interesse eines leistungsfähigen Werkzeughandlings weist im Falle der Erfindungsbauart nach Patentanspruch 7 der Werkzeughalter der Werkzeugtransfervorrichtung eine Mehrzahl von Werkzeughalteorganen auf, die in Richtung der Werkzeugtransferbewegung gegeneinander versetzt sind. Aufgrund dieses Merkmals besteht insbesondere die Möglichkeit, einen Werkzeugentnahme- und einen Werkzeugübergabevorgang zeitlich unmittelbar hintereinander durchzuführen. Stimmt die Übernahmeposition des einen Werkzeughalteorgans mit der Übergabeposition des anderen Werkzeughalteorgans überein, so ist zwischen der Übernahme des einen Werkzeuges und der Übergabe des anderen Werkzeuges lediglich eine verhältnismäßig kurze Transferstrecke zurückzulegen. Außerdem wird durch den gegenseitigen Versatz der Werkzeughalteorgane in Richtung der Werkzeugtransferbewegung und somit in Längsrichtung des Maschinengestells die Ausladung des Werkzeughalters in Querrichtung des Maschinengestells gering gehalten.

An der erfindungsgemäßen Werkzeugmaschine gemäß Patentanspruch 8 hat der Werkzeughalter der Werkzeugtransfervorrichtung vorteilhafterweise eine große Reichweite. Entsprechend aufnahmefähig für Bearbeitungswerkzeuge kann die Magazinplattform des stationsfernen Werkzeugmagazins ausgeführt sein.

Gemäß Patentanspruch 9 ist die Magazinplattform des stationsfernen Werkzeugmagazins in weiterer bevorzugter Ausgestaltung der Erfindung austauschbar an einer Tragstruktur des stationsfernen Werkzeugmagazins gelagert. Aufgrund dieses Erfindungsmerkmals kann die Konfiguration des stationsfernen Werkzeugmagazins auf einfache Art und Weise an wechselnde Erfordernisse angepasst werden. Beispielsweise lässt sich nach Erledigung einer Bearbeitungsaufgabe eine mit dem betreffenden Satz von Bearbeitungswerkzeugen bestückte Magazinplattform durch eine Magazinplattform ersetzen, auf welcher die für die nachfolgende Bearbeitung benötigten Bearbeitungswerkzeuge angeordnet sind. Die Magazinplattformen können abseits der Werkzeugmaschine gerüstet werden. Der Wechsel der Magazinplattformen kann insbesondere manuell erfolgen.

Nachfolgend wird die Erfindung anhand beispielhafter schematischer Darstellungen näher erläutert. Es zeigen:
- Figuren 1 bis 9: eine Stanzmaschine für die Blechbearbeitung mit einer Werkzeugtransfervorrichtung und einem stationsfernen Werkzeugmagazin erster Bauart beim Werkzeugwechsel und
- Figuren 10 und 11: eine Stanzmaschine für die Blechbearbeitung mit einer Werkzeugtransfervorrichtung und einem stationsfernen Werkzeugmagazin zweiter Bauart beim Werkzeugwechsel.

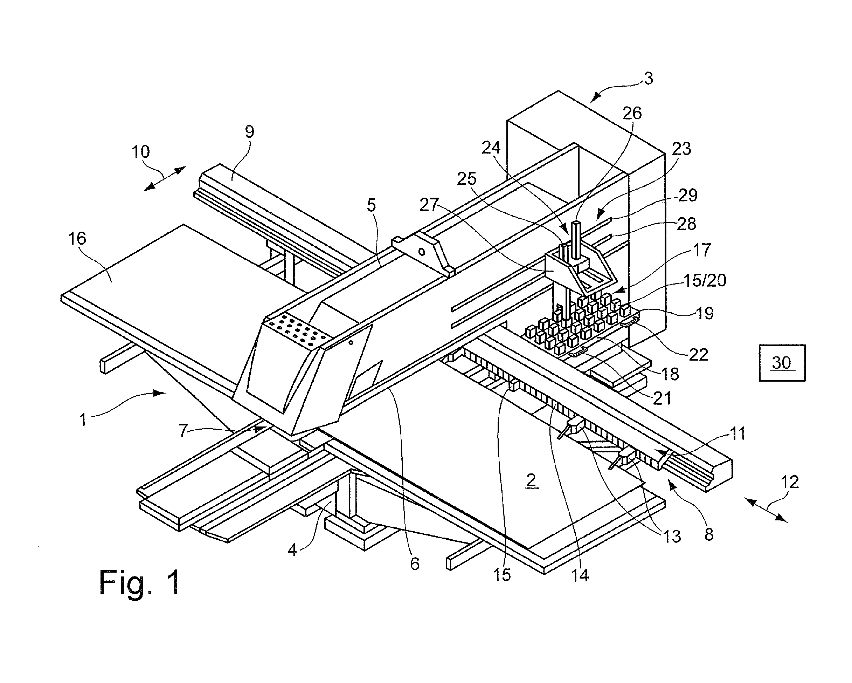

Gemäß Figur 1 besitzt eine als Stanzmaschine 1 ausgeführte Werkzeugmaschine zum Bearbeiten von Blechen 2 ein C-förmiges Maschinengestell 3 mit einem unteren Gestellschenkel 4 und einem oberen Gestellschenkel 5. Der untere Gestellschenkel 4 und der obere Gestellschenkel 5 verlaufen in Längsrichtung des Maschinengestells 3 und sind in vertikaler Richtung unter Ausbildung eines Gestellinnenraumes bzw. Rachenraumes 6 voneinander beabstandet. An den freien Enden des unteren Gestellschenkels 4 und des oberen Gestellschenkels 5 befindet sich als Bearbeitungsstation der Stanzmaschine 1 eine in den Figuren verdeckte Stanzstation 7 üblicher Bauart. Die Stanzstation 7 umfasst in gewohnter Weise eine untere Werkzeugaufnahme an dem unteren Gestellschenkel 4 und eine obere Werkzeugaufnahme an dem oberen Gestellschenkel 5.

In dem Rachenraum 6 des Maschinengestells 3 ist eine gleichfalls herkömmliche Koordinatenführung 8 teilweise untergebracht. Die Koordinatenführung 8 umfasst einen Querträger 9, der an dem unteren Gestellschenkel 4 in Längsrichtung des Maschinengestells 3 beweglich geführt ist und der motorisch angetrieben in Richtung eines Doppelpfeils 10 verfahren kann. Der Querträger 9 führt seinerseits eine horizontal verlaufende Querschiene 11, die teilweise innerhalb des Rachenraums 6 angeordnet ist und die mittels eines motorischen Antriebes in Richtung eines Doppelpfeils 12 quer zu dem Maschinengestell 3 bewegt wird. Die Querschiene 11 ist mit Spannpratzen 13 versehen und weist außerdem Lagerplätze 14 für Bearbeitungswerkzeuge in Form von Stanzwerkzeugen 15 auf. Die Stanzwerkzeuge 15 sind herkömmlicher Bauart und umfassen dementsprechend als Oberwerkzeug einen Stanzstempel, als Unterwerkzeug eine Stanzmatrize und außerdem einen Abstreifer. Die Einzelteile jedes der Stanzwerkzeuge 15 sind wie üblich in einer Werkzeugkassette untergebracht. Zur Handhabung der Stanzwerkzeuge 15 wird die betreffende Werkzeugkassette gehandhabt. Die Stanzwerkzeuge 15 einschließlich der jeweils zugehörigen Werkzeugkassetten sind in den Figuren nur schematisch dargestellt.

Mittels der Spannpratzen 13 wird ein zu bearbeitendes Blech 2 in gewohnter Weise an der Koordinatenführung 8 fixiert. Aufgrund der Beweglichkeit des Querträgers 9 in Richtung des Doppelpfeils 10 und der Querschiene 11 in Richtung des Doppelpfeils 12 kann das Blech 2 mittels der Koordinatenführung 8 in einer durch die Doppelpfeile 10 und 12 aufgespannten horizontalen Bearbeitungsebene bewegt werden. Entsprechende Bewegungen des Bleches 2 werden ausgeführt, um das Blech 2 gegenüber der Stanzstation 7 der Stanzmaschine 1 für die Bearbeitung zu positionieren bzw. um das Blech 2 bei der stanzenden Bearbeitung relativ zu der Stanzstation 7 zu bewegen. In beiden Fällen ist das Blech 2 auf einem stationären Werkstücktisch 16 der Stanzmaschine 1 gelagert.

Mit den Lagerplätzen 14 für Stanzwerkzeuge 15 bildet die Querschiene 11 der Koordinatenführung 8 einen Werkzeugträger bzw. ein nahe der Bearbeitungsstation 7 angeordnetes und daher stationsnahes Werkzeugmagazin. Üblicherweise ist die Querschiene 11 mit einem eine Mehrzahl von Stanzwerkzeugen 15 umfassenden Stanzwerkzeugsatz für die jeweils durchzuführende Blechbearbeitung bestückt. In den Figuren sind an der Querschiene 11 der Anschaulichkeit halber nur maximal zwei Stanzwerkzeuge 15 gezeigt.

An der oberen Werkzeugaufnahme und an der unteren Werkzeugaufnahme der Stanzstation 7 werden die Stanzwerkzeuge 15 in gewohnter Weise mittels der Koordinatenführung 8 ein- und ausgewechselt. Auch zu diesem Zweck werden die Beweglichkeit des Querträgers 9 der Koordinatenführung 8 in Richtung des Doppelpfeils 10 und die Beweglichkeit der Querschiene 11 in Richtung des Doppelpfeils 12 genutzt. Zum Werkzeugwechsel fährt die Koordinatenführung 8 zunächst mit einem leeren Lagerplatz 14 der Querschiene 11 die Stanzstation 7 an. Das an der Stanzstation 7 eingewechselte Stanzwerkzeug 15 wird anschließend aus der oberen Werkzeugaufnahme und aus der untere Werkzeugaufnahme der Stanzstation 7 auf den zuvor leeren Lagerplatz 14 der Querschiene 11 übernommen. Anschließend wird das für den nächsten Bearbeitungsschritt benötigte und an der Querschiene 11 vorgehaltene Stanzwerkzeug 15 durch entsprechendes Verfahren der Koordinatenführung 8 in die obere Werkzeugaufnahme und in die untere Werkzeugaufnahme der Stanzstation 7 eingewechselt.

Während des Werkzeugwechsels an der Stanzstation 7 ist das zu bearbeitende Blech 2 von der Koordinatenführung 8 gelöst und ruht auf dem Werkstücktisch 16. Nach Beendigung des Werkzeugwechsels an der Stanzstation 7 wird das zu bearbeitenden Blech 2 von der Koordinatenführung 8 mit den Spannpratzen 13 erfasst und anschließend zur Durchführung der anstehenden Bearbeitung relativ zu dem an der Stanzstation 7 eingewechselten Stanzwerkzeug 15 bewegt.

Die an den Lagerplätzen 14 der Querschiene 11 vorgehaltenen Stanzwerkzeuge 15 stammen aus einem stationsfernen Werkzeugmagazin 17, das nahe dem Rachenraum 6 an dem hinteren Ende des Maschinengestells 3 vorgesehen ist. Das stationsferne Werkzeugmagazin 17 besitzt eine Magazinplattform 18, die in eine an dem Maschinengestell 3 befestigte Tragstruktur 19 des stationsfernen Werkzeugmagazins 17 austauschbar eingeschoben und dadurch lösbar mit dem Maschinengestell 3 verbunden ist. An ihrer Oberseite weist die Magazinplattform 18 Lagerplätze 20 für Stanzwerkzeuge 15 auf. In dem dargestellten Beispielsfall sind auf der Magazinplattform 18 drei in Längsrichtung des Maschinengestells 3 parallel zueinander verlaufende Lagerplatzreihen mit jeweils sechs Lagerplätzen 20 vorgesehen. Die Magazinplattform 18 kann dementsprechend insgesamt achtzehn Stanzwerkzeuge 15 lagern. Bei entsprechender Länge des Maschinengestells 3 kann eine Lagerplatzreihe beispielsweise auch sieben Lagerplätze 20 umfassen. Griffe 21, 22 an der Magazinplattform 18 werden beim Wechseln der Magazinplattform 18 zu deren Handhabung genutzt.

Zum Überführen von Stanzwerkzeugen 15 zwischen dem stationsfernen Werkzeugmagazin 17 und dem stationsnahen Werkzeugmagazin, d.h. der Querschiene 11 der Koordinatenführung 8, dient an der Stanzmaschine 1 gemäß den Figuren 1 bis 9 eine Werkzeugtransfervorrichtung 23. Diese umfasst einen Werkzeughalter 24 mit zwei als Werkzeuggreifer 25, 26 ausgeführten Werkzeughalteorganen. Die Werkzeuggreifer 25, 26 sind herkömmlicher Bauart. Sie können motorisch geöffnet und geschlossen werden und sind numerisch gesteuert.

Mit beiden Werkzeuggreifern 25, 26 ist der Werkzeughalter 24 in Querrichtung des Maschinengestells 3 beweglich an einem Transferschlitten 27 der Werkzeugtransfervorrichtung 23 beweglich geführt. Außerdem können die Werkzeuggreifer 25, 26 bzw. der Werkzeughalter 24 in vertikaler Richtung gegenüber dem Transferschlitten 27 angehoben und abgesenkt werden. Der Transferschlitten 27 ist seinerseits an maschinengestellfesten Führungsschienen 28, 29 längs des oberen Gestellschenkels 5 des Maschinengestells 3 verfahrbar. Sämtliche Bewegungen des Werkzeughalters 24 und des Transferschlittens 27 der Werkzeugtransfervorrichtung 23 werden mit Hilfe nicht im Einzelnen dargestellter Antriebsmotoren erzeugt. Eine in Figur 1 angedeutete programmierbare numerische Steuerung 30 steuert die Antriebsmotoren der Werkzeugtransfervorrichtung 23 und darüber hinaus auch alle weiteren wesentlichen Funktionen der Stanzmaschine 1.

Soll ein leerer Lagerplatz 14 an der Querschiene 11 mit einem bestimmten, in dem stationsfernen Werkzeugmagazin 17 vorgehaltenen Stanzwerkzeug 15 bestückt werden, so verfährt zunächst die Koordinatenführung 8 in ihre hintere Endstellung an dem Maschinengestell 3. Anschließend oder gleichzeitig wird der Werkzeughalter 24 mit einem der Werkzeuggreifer 25, 26, in dem dargestellten Beispielsfall mit dem Werkzeuggreifer 25, längs des oberen Gestellschenkels 5 des Maschinengestells 3 in eine Übernahmeposition oberhalb des an der Querschiene 11 einzuwechselnden Stanzwerkzeuges 15 bewegt, das zu diesem Zeitpunkt noch auf der Magazinplattform 18 des stationsfernen Werkzeugmagazins 17 abgestellt ist. Zu diesem Zweck verfährt der Transferschlitten 27 der Werkzeugtransfervorrichtung 23 längs der Führungsschienen 28, 29.

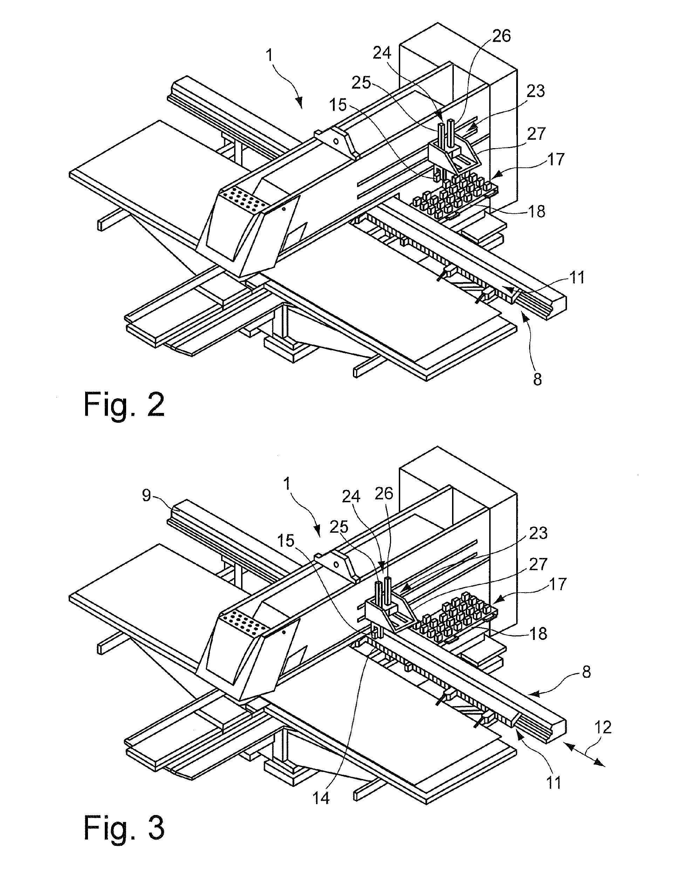

Aus der Position oberhalb des zu transferierenden Stanzwerkzeuges 15 wird der geöffnete Werkzeuggreifer 25 in Richtung auf die Magazinplattform 18 des stationsfernen Werkzeugmagazins 17 abgesenkt, bis er an dem aufzunehmenden Stanzwerkzeug 15 angeordnet ist. Durch entsprechende Betätigung des Werkzeuggreifers 25 wird das Stanzwerkzeug 15 an dem Werkzeuggreifer 25 festgelegt. Es ergeben sich damit die Verhältnisse gemäß Figur 1. Bei nach wie vor in der Übernahmeposition an dem stationsfernen Werkzeugmagazin 17 angeordnetem Werkzeughalter 24 wird der Werkzeuggreifer 25 mit dem daran fixierten Stanzwerkzeug 15 angehoben und dadurch das Stanzwerkzeug 15 von seinem Lagerplatz 20 auf der Magazinplattform 18 des stationsfernen Werkzeugmagazins 17 entnommen (Figur 2).

Anschließend wird der Werkzeughalter 24 gemeinsam mit dem daran gehaltenen Stanzwerkzeug 15 durch den Transferschlitten 27 mit einer Werkzeugtransferbewegung längs des Maschinengestells 3 so weit in Richtung auf die Querschiene 11 verfahren bis der Werkzeughalter 24 seine stationsnahe Übergabeposition an der Querschiene 11 erreicht hat (Figur 3). Nimmt der Werkzeughalter 24 seine stationsnahe Übergabeposition ein, so ist das Stanzwerkzeug 15 an dem Werkzeuggreifer 25 oberhalb desjenigen Lagerplatzes 14 der Querschiene 11 angeordnet, an welchen es zu übergeben ist. Die Querschiene 11 ist gegenüber dem Querträger 9 der Koordinatenführung 8 in Richtung des Doppelpfeils 12 entsprechend positioniert.

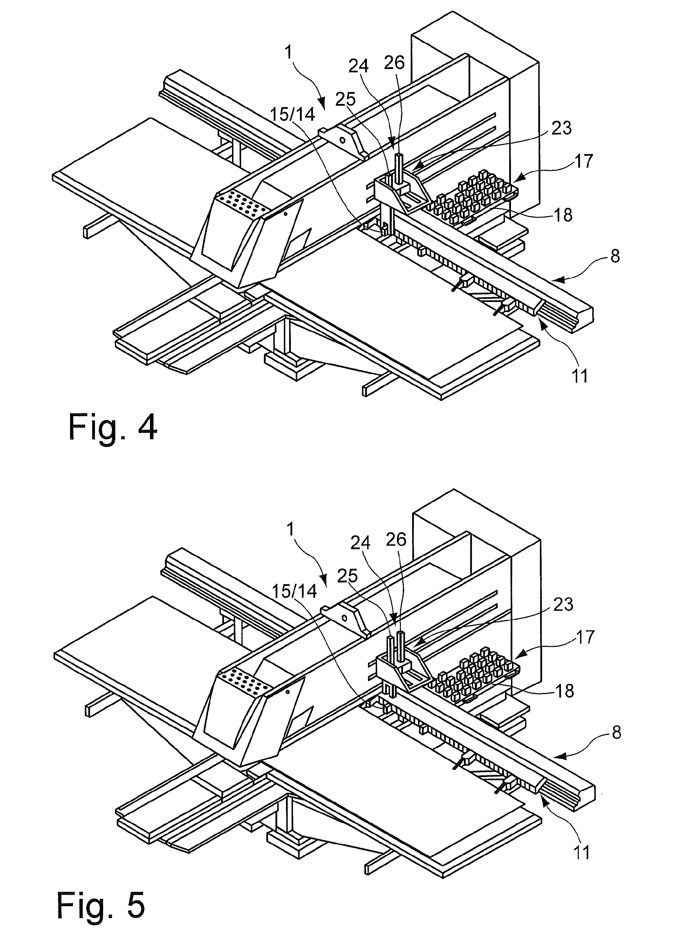

Zur Übergabe des Stanzwerkzeugs 15 an die Querschiene 11 wird der Werkzeuggreifer 25 des Werkzeughalters 24 in vertikaler Richtung abgesenkt und dadurch das Stanzwerkzeug 15 in den betreffenden Lagerplatz 14 an der Querschiene 11 eingesetzt (Figur 4). Anschließend wird das Stanzwerkzeug 15 durch Öffnen des Werkzeuggreifers 25 von dem Werkzeughalter 24 freigegeben. Nach der Übergabe des Stanzwerkzeuges 15 an die Querschiene 11 wird der Werkzeuggreifer 25 des Werkzeughalters 24 angehoben (Figur 5).

Ist ein weiteres Stanzwerkzeug 15 von dem stationsfernen Werkzeugmagazin 17 zu der Querschiene 11 zu transferieren, so verfährt der Transferschlitten 27 der Werkzeugtransfervorrichtung 23 mit dem Werkzeughalter 24 so weit in Richtung auf das hintere Ende des Maschinengestells 3, bis der Werkzeughalter 24 mit dem Werkzeuggreifer 25 oder mit dem Werkzeuggreifer 26 in der stationsfernen Übernahmeposition oberhalb des betreffenden Stanzwerkzeuges 15 an der Magazinplattform 18 des stationsfernen Werkzeugmagazins 17 angeordnet ist. In Abhängigkeit von der Position des Lagerplatzes 20 des betreffenden Stanzwerkzeuges 15 kann es erforderlich sein, den für den Werkzeugtransfer genutzten Werkzeuggreifer 25, 26 senkrecht zu dem Maschinengestell 3 zu bewegen, um auf diese Weise auf ein Stanzwerkzeug 15 der mittleren oder der maschinengestellfernen Reihe der Lagerplätze 20 auf der Magazinplattform 18 des stationsfernen Werkzeugmagazins 17 zugreifen zu können.

In der vorstehend beschrieben Art und Weise wird das zu transferierende Stanzwerkzeug 15 von der Magazinplattform 18 des stationsfernen Werkzeugmagazins 17 aufgenommen und an der Querschiene 11 eingewechselt.

Während der Bewegung längs des Maschinengestells 3 befindet sich der Werkzeughalter 24 mit beiden Werkzeuggreifern 25, 26 an dem Transferschlitten 27 stets in der gestellnahen Endstellung senkrecht zu dem Maschinengestell 3. Auf diese Art und Weise werden massebedingte Kräfte vermieden, die auftreten würden, wenn der Werkzeughalter 24 bei seiner Bewegung längs des Maschinengestells 3 von diesem weiter beabstandet wäre.

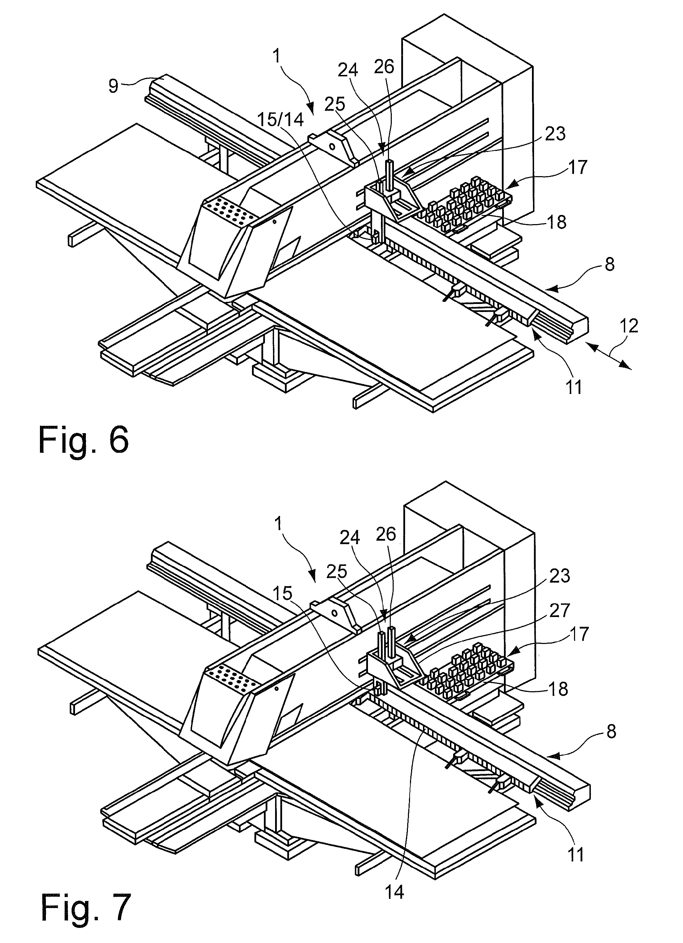

Der Ablauf eines Werkzeugtransfers von der Querschiene 11 der Stanzmaschine 1 zu dem stationsfernen Werkzeugmagazin 17 ist in den Figuren 6 bis 9 veranschaulicht. Zuvor wurde das zu transferierende Stanzwerkzeug 15 durch eine entsprechende Bewegung der Querschiene 11 längs des Querträgers 9 der Koordinatenführung 8 unterhalb des in die stationsnahe Übernahmeposition verfahrenen Werkzeughalters 24 angeordnet.

In der stationsnahen Übernahmeposition befindet sich der Werkzeughalter 24 in Figur 6. Der Werkzeuggreifer 25 ist in vertikaler Richtung abgesenkt und hat das an einem Lagerplatz 14 der Querschiene 11 lösbar angebrachte Stanzwerkzeug 15 erfasst.

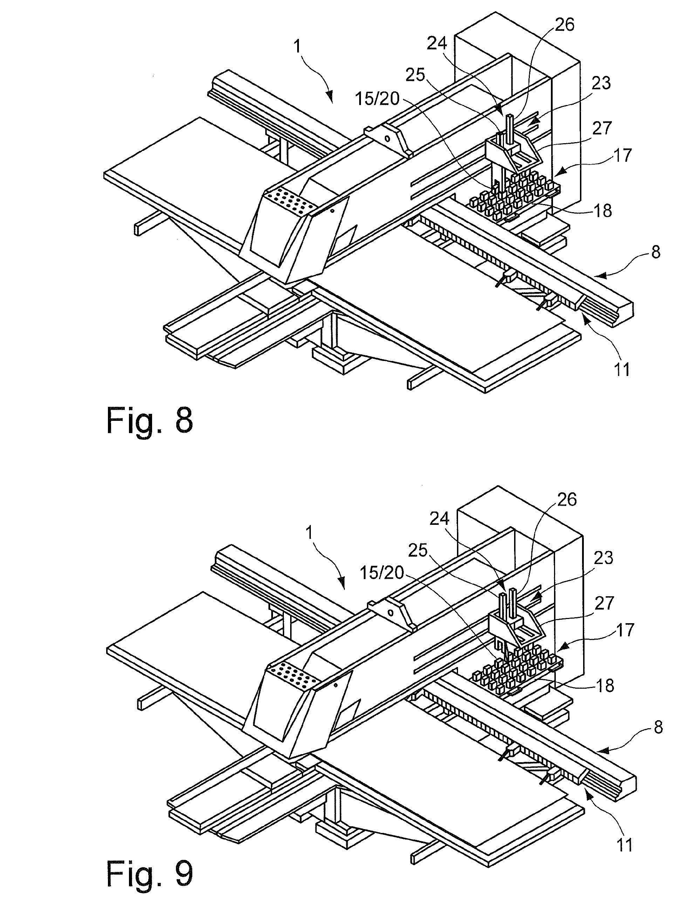

Ausgehend von den Verhältnissen gemäß Figur 6 wird der Werkzeuggreifer 25 mit dem daran festgelegten Stanzwerkzeug 15 angehoben (Figur 7). Anschließend verfährt der Transferschlitten 27 mit dem Werkzeughalter 24 und dem Stanzwerkzeug 15 so weit in Richtung auf das hintere Ende des Maschinengestells 3, bis der Werkzeughalter 24 seine stationsferne Übergabeposition erreicht hat und das an dem Werkzeuggreifer 25 gehaltene Stanzwerkzeug 15 oberhalb des für das Stanzwerkzeug 15 vorgesehenen Lagerplatzes 20 auf der Magazinplattform 18 des stationsfernen Werkzeugmagazins 17 angeordnet ist. Nun wird der Werkzeuggreifer 25 mit dem Stanzwerkzeug 15 abgesenkt und dadurch das Stanzwerkzeug 15 an den ihm zugeordneten Lagerplatz 20 übergeben (Figur 8). Der Werkzeuggreifer 25 gibt nun das Stanzwerkzeug 15 frei und wird anschließend in seine vertikale Ausgangsposition angehoben (Figur 9). Die Werkzeugtransfervorrichtung 23 ist damit bereit für einen weiteren Werkzeugwechsel.

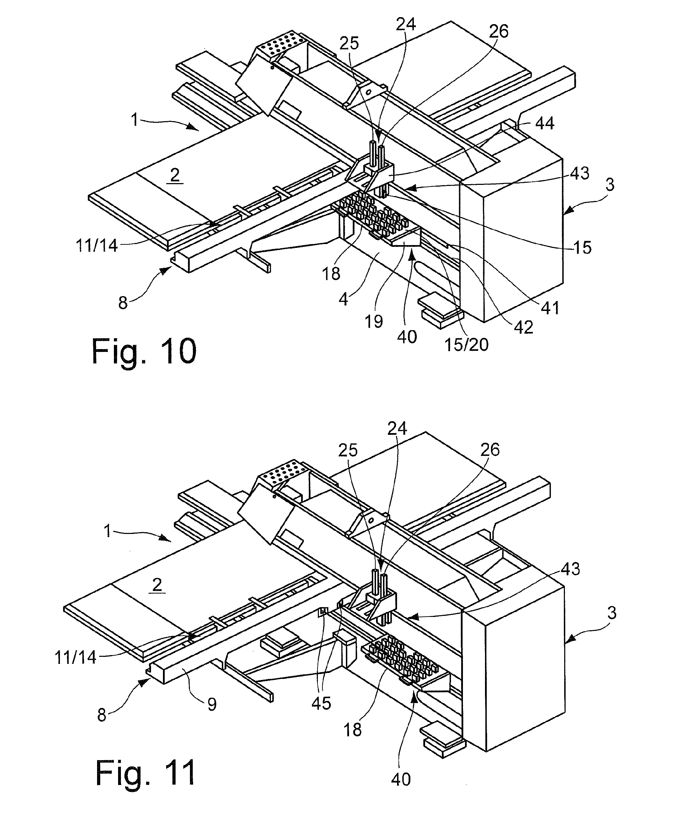

Die in den Figuren 10 und 11 dargestellte Stanzmaschine 1 unterscheidet sich von der Stanzmaschine 1 gemäß den Figuren 1 bis 9 durch die konstruktive Ausführung des stationsfernen Werkzeugmagazins sowie der Werkzeugtransfervorrichtung.

Die Stanzmaschine 1 gemäß den Figuren 10 und 11 weist ein stationsfernes Werkzeugmagazin 40 auf, das in Längsrichtung des Maschinengestells 3 beweglich ist. Zu diesem Zweck ist die Tragstruktur 19 des stationsfernen Werkzeugmagazins 40 gemeinsam mit der Magazinplattform 18 an in Längsrichtung des unteren Gestellschenkels 4 verlaufenden Führungsschienen 41, 42 geführt. Auf der Magazinplattform 18 sind vier Reihen mit jeweils sechs Lagerplätzen 20 für Stanzwerkzeuge 15 vorgesehen. Eine Werkzeugtransfervorrichtung 43 weist einen in Längsrichtung des Maschinengestells 3 stationären Werkzeughalter 24 auf. An einem mit dem Maschinengestell 3 fest verbundenen Tragrahmen 44 ist der in Längsrichtung des Maschinengestells 3 unbewegliche Werkzeughalter 24 in Querrichtung des Maschinengestells 3 beweglich geführt. Die Werkzeuggreifer 25, 26 können in vertikaler Richtung angehoben und abgesenkt werden.

Um ein Stanzwerkzeug 15 von der Magazinplattform 18 des stationsfernen Werkzeugmagazins 40 zu einem Lagerplatz 14 an der Querschiene 11 zu transferieren, wird das stationsferne Werkzeugmagazin 40 mit seiner Magazinplattform 18 in Längsrichtung des Maschinengestells 3 relativ zu dem stationären Werkzeughalter 24 der Werkzeugtransfervorrichtung 43 positioniert. Die Positionierbewegung des stationsfernen Werkzeugmagazins 40 wird mittels der Koordinatenführung 8 erzeugt. Zu diesem Zweck wird das stationsferne Werkzeugmagazin 40 mit Hilfe einer schaltbaren Kupplung 45 (Figur 11) an den Querträger 9 und über diesen auch an die Querschiene 11 der Koordinatenführung 8 angebunden. Durch Verfahren der Koordinatenführung 8 längs des Maschinengestells 3 kann dann die Magazinplattform 18 des stationsfernen Werkzeugmagazins 40 gegenüber dem Werkzeughalter 24 der Werkzeugtransfervorrichtung 43 derart positioniert werden, dass der Werkzeughalter 24 mit dem für das Handling des betreffenden Stanzwerkzeuges 15 vorgesehene Werkzeuggreifer 26 in der Übernahmeposition oberhalb des betreffenden Stanzwerkzeuges 15 angeordnet ist. Der Werkzeuggreifer 26 wird nach dem Positionieren der Magazinplattform 18 des stationsfernen Werkzeugmagazins 40 in vertikaler Richtung abgesenkt und ergreift das Stanzwerkzeug 15. Gemeinsam mit dem Stanzwerkzeug 15 wird der Werkzeuggreifer 26 anschließend angehoben. Damit ergeben sich die Verhältnisse gemäß Figur 10.

Ausgehend von diesem Betriebszustand verfährt die Koordinatenführung 8 in Richtung auf das hintere Ende des Maschinengestells 3, bis der betreffende Lagerplatz 14 an der Querschiene 11 unterhalb des an dem Werkzeuggreifer 26 festgelegten Stanzwerkzeuges 15 angeordnet ist. Dabei wird das an den Querträger 9 der Koordinatenführung 8 angebundene stationsferne Werkzeugmagazin 40 in Richtung auf das hintere Ende des Maschinengestells 3 verschoben. Durch Absenken des Werkzeuggreifers 26 des seine Übergabeposition einnehmenden Werkzeughalters 24 wird dann das Stanzwerkzeug 15 an den hierfür vorgesehenen Lagerplatz 14 an der Querschiene 11 übergeben.

Ist die Querschiene 11 mit den für die anschließende Blechbearbeitung benötigten Stanzwerkzeugen 15 bestückt, wird die Kupplung 45 gelöst und dadurch die Koordinatenführung 8 von dem stationsfernen Werkzeugmagazin 40 getrennt. Ohne das stationsferne Werkzeugmagazin 40 mitschleppen zu müssen, kann die Koordinatenführung 8 anschließend die für die durchzuführende Blechbearbeitung und die Werkzeugwechsel an der Stanzstation 7 erforderlichen Bewegungen auch in Längsrichtung des Maschinengestells 3 ausführen (Figur 11). Das von der Koordinatenführung 8 entkoppelte stationsferne Werkzeugmagazin 40 verbleibt in seiner Ruheposition am hinteren Ende des Maschinengestells 3. Zur Durchführung eines weiteren Werkzeugwechsels kann das stationsferne Werkzeugmagazin 40 von der Koordinatenführung 8 aus seiner hinteren Endstellung abgeholt werden.

## Patentansprüche

1. Werkzeugmaschine zum Bearbeiten von plattenartigen Werkstücken, insbesondere von Blechen (2),
• mit einem Maschinengestell (3), das einen unteren Gestellschenkel (4) sowie einen oberen Gestellschenkel (5) aufweist, wobei sich der untere Gestellschenkel (4) und der obere Gestellschenkel (5) mit ihrer Längsrichtung in Längsrichtung des Maschinengestells (3) erstrecken und unter Ausbildung eines Gestellinnenraumes (6) in vertikaler Richtung voneinander beabstandet sind,
• mit einer Bearbeitungsstation (7), an welcher ein Bearbeitungswerkzeug (15) für die Werkstückbearbeitung ein- und auswechselbar ist,
• mit einem wenigstens teilweise in dem Gestellinnenraum (6) des Maschinengestells (3) angeordneten stationsnahen Werkzeugmagazin (11) mit Lagerplätzen (14) für an der Bearbeitungsstation (7) ein- und auswechselbare Bearbeitungswerkzeuge (15), wobei das stationsnahe Werkzeugmagazin (11) und die Bearbeitungsstation (7) relativ zueinander bewegbar sind und dadurch einzuwechselnde Bearbeitungswerkzeuge (15) der Bearbeitungsstation (7) zuführbar und/oder auszuwechselnde Bearbeitungswerkzeuge (15) von der Bearbeitungsstation (7) abführbar sind,
• mit einem stationsfernen Werkzeugmagazin (17, 40) mit Lagerplätzen (20) für an der Bearbeitungsstation (7) ein- und auswechselbare Bearbeitungswerkzeuge (15), wobei die Lagerplätze (20) auf einer Magazinplattform (18) des stationsfernen Werkzeugmagazins (17, 40) vorgesehen sind, welche gegenüber dem Maschinengestell (3) seitlich in horizontaler Richtung vorsteht und welche von oben zugänglich ist sowie
• mit einer Werkzeugtransfervorrichtung (23, 43), mittels derer an der Bearbeitungsstation (7) ein- und auswechselbare Bearbeitungswerkzeuge (15) zwischen dem stationsfernen Werkzeugmagazin (17, 40) und dem stationsnahen Werkzeugmagazin (11) transferierbar sind und die einen Werkzeughalter (24) aufweist, wobei zum Transfer von an der Bearbeitungsstation (7) ein- und auswechselbaren Bearbeitungswerkzeugen (15) zwischen dem stationsfernen Werkzeugmagazin (17, 40) und dem stationsnahen Werkzeugmagazin (11) der Werkzeughalter (24) der Werkzeugtransfervorrichtung (23, 43) einerseits und das stationsferne Werkzeugmagazin (17, 40) und/oder das stationsnahe Werkzeugmagazin (11) andererseits relativ zueinander mit einer Werkzeugtransferbewegung in Längsrichtung des Maschinengestells (3) bewegbar sind und wobei mittels des Werkzeughalters (24) der Werkzeugtransfervorrichtung (23, 43) an der Bearbeitungsstation (7) ein- und auswechselbare Bearbeitungswerkzeuge (15) von den Lagerplätzen (20) des stationsfernen Werkzeugmagazins (17, 40) und von den Lagerplätzen (14) des stationsnahen Werkzeugmagazins (11) entnehmbar oder an die Lagerplätze (20) des stationsfernen Werkzeugmagazins (17, 40) und an die Lagerplätze (14) des stationsnahen Werkzeugmagazins (11) übergebbar sind,
**dadurch gekennzeichnet, dass**
oberhalb der Magazinplattform (18) des stationsfernen Werkzeugmagazins (17, 40) der Werkzeughalter (24) der Werkzeugtransfervorrichtung (23, 43) an der betreffenden Längsseite des Maschinengestells (3) derart angebracht ist, dass der Werkzeughalter (24) der Werkzeugtransfervorrichtung (23, 43) einerseits und das stationsferne Werkzeugmagazin (17, 40) und/oder das stationsnahe Werkzeugmagazin (11) andererseits relativ zueinander mit einer Werkzeugtransferbewegung in Längsrichtung des Maschinengestells (3) bewegbar sind,
• indem der Werkzeughalter (24) der Werkzeugtransfervorrichtung (23, 43) oberhalb der Magazinplattform (18) an dem Maschinengestell (3) in dessen Längsrichtung bewegbar geführt und mit einer Werkzeugtransferbewegung in eine stationsferne Übernahme-/Übergabeposition an dem stationsfernen Werkzeugmagazin (17) und in eine stationsnahe Übernahme-/Übergabeposition an dem stationsnahen Werkzeugmagazin (11) bewegbar ist und/oder
• indem das stationsnahe Werkzeugmagazin (11) und/oder die Magazinplattform (18) des stationsfernen Werkzeugmagazins (40) unterhalb des an der betreffenden Längsseite des Maschinengestells (3) angebrachten Werkzeughalters (24) an dem Maschinengestell (3) in dessen Längsrichtung bewegbar geführt und mit einer Werkzeugtransferbewegung in Längsrichtung des Maschinengestells (3) relativ zu dem Werkzeughalter (24) der Werkzeugtransfervorrichtung (43) in eine Übernahme-/Übergabeposition bewegbar ist oder sind.

2. Werkzeugmaschine nach Anspruch 1, **dadurch gekennzeichnet, dass** die Magazinplattform (18) mit dem Maschinengestell (3) verbunden ist.

3. Werkzeugmaschine nach einem der vorhergehenden Ansprüche, **dadurch gekennzeichnet, dass** das stationsnahe Werkzeugmagazin (11) einen wenigstens teilweise in dem Gestellinnenraum (6) des Maschinengestells (3) angeordneten und sich quer zu der Längsrichtung des Maschinengestells (3) erstreckenden horizontalen Werkzeugträger (11) aufweist, an welchem Lagerplätze (14) für an der Bearbeitungsstation (7) ein- und auswechselbare Bearbeitungswerkzeuge (15) quer zu der Längsrichtung des Maschinengestells (3) nebeneinander angeordnet sind.

4. Werkzeugmaschine nach einem der vorhergehenden Ansprüche, **dadurch gekennzeichnet, dass** das stationsnahe Werkzeugmagazin (11) relativ zu dem Werkzeughalter (24) der Werkzeugtransfervorrichtung (43) in Längsrichtung des Maschinengestells (3) bewegbar ist und dass die Magazinplattform (18) des stationsfernen Werkzeugmagazins (40) mittels des stationsnahen Werkzeugmagazins (11) mit einer Werkzeugtransferbewegung in Längsrichtung des Maschinengestells (3) relativ zu dem Werkzeughalter (24) der Werkzeugtransfervorrichtung (43) in eine Übernahme-/Übergabeposition bewegbar ist.

5. Werkzeugmaschine nach Anspruch 4, **dadurch gekennzeichnet, dass** die Magazinplattform (18) des stationsfernen Werkzeugmagazins (40) für die Werkzeugtransferbewegung an das stationsnahe Werkzeugmagazin (11) lösbar ankuppelbar ist.

6. Werkzeugmaschine nach Anspruch 5, **dadurch gekennzeichnet, dass** die von dem stationsnahen Werkzeugmagazin (11) entkoppelte Magazinplattform (18) des stationsfernen Werkzeugmagazins (40) in einer Ruheposition abseits der Übernahme-/Übergabeposition anordenbar ist.

7. Werkzeugmaschine nach einem der vorhergehenden Ansprüche, **dadurch gekennzeichnet, dass** der Werkzeughalter (24) der Werkzeugtransfervorrichtung (23, 43) eine Mehrzahl von Werkzeughalteorganen (25, 26) aufweist, die in Richtung der Werkzeugtransferbewegung gegeneinander versetzt sind.

8. Werkzeugmaschine nach einem der vorhergehenden Ansprüche, **dadurch gekennzeichnet, dass** der Werkzeughalter (24) der Werkzeugtransfervorrichtung (23, 43) senkrecht zu der Längsrichtung des Maschinengestells (3) gegenüber der Magazinplattform (18) des stationsfernen Werkzeugmagazins (17, 40) in horizontaler Richtung zustellbar ist.

9. Werkzeugmaschine nach einem der vorhergehenden Ansprüche, **dadurch gekennzeichnet, dass** die Magazinplattform (18) des stationsfernen Werkzeugmagazins (17, 40) austauschbar an einer Tragstruktur (19) des stationsfernen Werkzeugmagazins (17, 40) gelagert ist.

## Claims

1. Machine tool for processing plate-like workpieces, in particular metal sheets (2),
• having a machine frame (3) which has a lower frame leg (4) and an upper frame leg (5), the lower frame leg (4) and the upper frame leg (5) extending with the longitudinal direction thereof in the longitudinal direction of the machine frame (3) and being spaced apart from each other in the vertical direction with a frame inner space (6) being formed,
• having a processing station (7) at which a processing tool (15) for the workpiece processing operation can be introduced and replaced,
• having a tool magazine (11) which is arranged at least partially in the frame inner space (6) of the machine frame (3), which is close to the processing station and which has storage spaces (14) for processing tools (15) which can be introduced and replaced at the processing station (7), the tool magazine (11) which is close to the processing station and the processing station (7) being able to be moved relative to each other and processing tools (15) which are intended to be introduced thereby being able to be supplied to the processing station (7) and/or processing tools (15) which are intended to be replaced being able to be removed from the processing station (7),
• having a tool magazine (17, 40) which is remote from the processing station and which has storage spaces (20) for processing tools (15) which can be introduced and replaced at the processing station (7), the storage spaces (20) being provided on a magazine platform (18) of the tool magazine (17, 40) which is remote from the processing station and which protrudes with respect to the machine frame (3) laterally in a horizontal direction and which is accessible from above and
• having a tool transfer device (23, 43) by means of which processing tools (15) which can be introduced and replaced at the processing station (7) can be transferred between the tool magazine (17, 40) which is remote from the processing station and the tool magazine (11) which is close to the processing station and which has a tool holder (24), wherein, in order to transfer processing tools (15) which can be introduced and replaced at the processing station (7) between the tool magazine (17, 40) which is remote from the processing station and the tool magazine (11) which is close to the processing station, the tool holder (24) of the tool transfer device (23, 43), on the one hand, and the tool magazine (17, 40) which is remote from the processing station and/or the tool magazine (11) which is close to the processing station, on the other hand, are able to be moved relative to each other with a tool transfer movement in the longitudinal direction of the machine frame (3) and wherein, by means of the tool holder (24) of the tool transfer device (23, 43), processing tools (15) which can be introduced and replaced at the processing station (7) are able to be removed from the storage spaces (20) of the tool magazine (17, 40) remote from the processing station and from the storage spaces (14) of the tool magazine (11) close to the processing station or are able to be transferred to the storage spaces (20) of the tool magazine (17, 40) remote from the processing station and to the storage spaces (14) of the tool magazine (11) close to the processing station,
**characterised in that**,
above the magazine platform (18) of the tool magazine (17, 40) remote from the processing station, the tool holder (24) of the tool transfer device (23, 43) is fitted to the respective longitudinal side of the machine frame (3) in such a manner that the tool holder (24) of the tool transfer device (23, 43), on the one hand, and the tool magazine (17, 40) remote from the processing station and/or the tool magazine (11) close to the processing station, on the other hand, can be moved relative to each other with a tool transfer movement in the longitudinal direction of the machine frame (3),
• by the tool holder (24) of the tool transfer device (23, 43) being movably guided above the magazine platform (18) on the machine frame (3) in the longitudinal direction thereof and being able to be moved with a tool transfer movement into a receiving/transfer position remote from the processing station at the tool magazine (17) remote from the processing station and being able to be moved into a receiving/transfer position close to the processing station at the tool magazine (11) close to the processing station and/or
• by the tool magazine (11) close to the processing station and/or the magazine platform (18) of the tool magazine (40) remote from the processing station being movably guided on the machine frame (3) in the longitudinal direction thereof below the tool holder (24) which is fitted to the respective longitudinal side of the machine frame (3) and being able to be moved into a receiving/transfer position with a tool transfer movement in the longitudinal direction of the machine frame (3) relative to the tool holder (24) of the tool transfer device (43).

2. Machine tool according to claim 1, **characterised in that** the magazine platform (18) is connected to the machine frame (3).

3. Machine tool according to either of the preceding claims, **characterised in that** the tool magazine (11) close to the processing station has a horizontal tool carrier (11) which is arranged at least partially in the frame inner space (6) of the machine frame (3) and which extends transversely relative to the longitudinal direction of the machine frame (3) and on which storage spaces (14) for processing tools (15) which can be introduced and replaced at the processing station (7) are arranged beside each other transversely relative to the longitudinal direction of the machine frame (3).

4. Machine tool according to any one of the preceding claims, **characterised in that** the tool magazine (11) which is close to the processing station can be moved relative to the tool holder (24) of the tool transfer device (43) in the longitudinal direction of the machine frame (3) and **in that** the magazine platform (18) of the tool magazine (40) remote from the processing station can be moved by means of the tool magazine (11) close to the processing station with a tool transfer movement in the longitudinal direction of the machine frame (3) relative to the tool holder (24) of the tool transfer device (43) into a receiving/transfer position.

5. Machine tool according to claim 4, **characterised in that** the magazine platform (18) of the tool magazine (40) remote from the processing station can be releasably coupled to the tool magazine (11) close to the processing station for the tool transfer movement.

6. Machine tool according to claim 5, **characterised in that** the magazine platform (18) of the tool magazine (40) which is remote from the processing station, which platform is decoupled from the tool magazine (11) close to the processing station, can be arranged in a rest position remote from the receiving/transfer position.

7. Machine tool according to any one of the preceding claims, **characterised in that** the tool holder (24) of the tool transfer device (23, 43) has a plurality of tool retention members (25, 26) which are offset with respect to each other in the direction of the tool transfer movement.

8. Machine tool according to any one of the preceding claims, **characterised in that** the tool holder (24) of the tool transfer device (23, 43) can be positioned perpendicularly to the longitudinal direction of the machine frame (3) with respect to the magazine platform (18) of the tool magazine (17, 40) remote from the processing station in the horizontal direction.

9. Machine tool according to any one of the preceding claims, **characterised in that** the magazine platform (18) of the tool magazine (17, 40) remote from the processing station is replaceably supported on a carrier structure (19) of the tool magazine (17, 40) remote from the processing station.

## Revendications

1. Machine-outil dévolue à l'usinage de pièces du type plaque, notamment de tôles (2), comprenant
• un bâti (3) muni d'une aile inférieure (4), ainsi que d'une aile supérieure (5), ladite aile inférieure (4) du bâti et ladite aile supérieure (5) du bâti s'étendant dans la direction longitudinale dudit bâti (3) de la machine, par leur direction longitudinale, et étant distantes l'une de l'autre dans le sens vertical, en formant un espace intérieur (6) dudit bâti,
• un poste d'usinage (7), au niveau duquel peut être inséré et extrait un outil d'usinage (15) affecté à l'usinage des pièces,
• un magasin d'outillage (11) proche du poste, au moins partiellement logé dans l'espace intérieur (6) du bâti (3) de la machine et pourvu d'emplacements de stockage (14) dédiés à des outils d'usinage (15) pouvant être insérés et extraits au niveau dudit poste d'usinage (7), ledit magasin d'outillage (11) proche du poste, et ledit poste d'usinage (7), étant mobiles l'un par rapport à l'autre de façon telle que des outils d'usinage (15) devant être insérés puissent être présentés audit poste d'usinage (7), et/ou que des outils d'usinage (15) devant être extraits puissent être dissociés d'avec ledit poste d'usinage (7),
• un magasin d'outillage (17, 40) éloigné du poste et pourvu d'emplacements de stockage (20) dédiés à des outils d'usinage (15) pouvant être insérés et extraits au niveau dudit poste d'usinage (7), lesdits emplacements de stockage (20) étant prévus sur une plate-forme d'emmagasinage (18) dudit magasin d'outillage (17, 40) éloigné du poste, qui est agencée avec saillie latérale dans le sens horizontal vis-à-vis du bâti (3) de la machine, et à laquelle un accès est offert depuis le haut,
• ainsi qu'un dispositif (23, 43) de transfert d'outils au moyen duquel des outils d'usinage (15), pouvant être insérés et extraits au niveau du poste d'usinage (7), peuvent être transférés entre le magasin d'outillage (17, 40) éloigné du poste et le magasin d'outillage (11) proche dudit poste, et qui est équipé d'un porte-outils (24), sachant que, pour effectuer le transfert d'outils d'usinage (15) pouvant être insérés et extraits au niveau dudit poste d'usinage (7), entre ledit magasin d'outillage (17, 40) éloigné du poste et ledit magasin d'outillage (11) proche dudit poste, d'une part le porte-outils (24) du dispositif (23, 43) de transfert d'outils, et d'autre part le magasin d'outillage (17, 40) éloigné du poste et/ou le magasin d'outillage (11) proche dudit poste, sont doués de mobilité relative par un mouvement de transfert d'outils s'opérant dans la direction longitudinale du bâti (3) de la machine, et sachant qu'au moyen dudit porte-outils (24) dudit dispositif (23, 43) de transfert d'outils, des outils d'usinage (15), pouvant être insérés et extraits au niveau du poste d'usinage (7), peuvent être prélevés des emplacements de stockage (20) du magasin d'outillage (17, 40) éloigné du poste, et des emplacements de stockage (14) du magasin d'outillage (11) proche dudit poste, ou peuvent être transférés auxdits emplacements de stockage (20) dudit magasin d'outillage (17, 40) éloigné du poste et auxdits emplacements de stockage (14) dudit magasin d'outillage (11) proche dudit poste,
**caractérisée par le fait que**
le porte-outils (24) du dispositif (23, 43) de transfert d'outils est installé sur le côté longitudinal concerné du bâti (3) de la machine, au-dessus de la plate-forme d'emmagasinage (18) du magasin d'outillage (17, 40) éloigné du poste, de telle sorte que d'une part ledit porte-outils (24) dudit dispositif (23, 43) de transfert d'outils, et d'autre part le magasin d'outillage (17, 40) éloigné du poste et/ou le magasin d'outillage (11) proche dudit poste, soient doués de mobilité relative par un mouvement de transfert d'outils, dans la direction longitudinale dudit bâti (3) de la machine,
• en ce sens que le porte-outils (24) du dispositif (23, 43) de transfert d'outils est guidé sur le bâti (3) de la machine avec mobilité dans la direction longitudinale de ce dernier, au-dessus de la plate-forme d'emmagasinage (18), et peut être mû, par un mouvement de transfert d'outils, vers une position de prélèvement/transfert éloignée du poste, sur le magasin d'outillage (17) éloigné dudit poste, et vers une position de prélèvement/transfert proche dudit poste, sur le magasin d'outillage (11) proche dudit poste, et/ou
• en ce sens que ledit magasin d'outillage (11) proche du poste, et/ou ladite plate-forme d'emmagasinage (18) dudit magasin d'outillage (40) éloigné du poste, est (sont) guidé(e)(s) sur le bâti (3) de la machine avec mobilité dans la direction longitudinale de ce dernier, au-dessous dudit porte-outils (24) installé sur le côté longitudinal concerné dudit bâti (3) de la machine, et peu(ven)t être mû (mue)(s) vers une position de prélèvement/transfert par un mouvement de transfert d'outils, dans ladite direction longitudinale dudit bâti (3) de la machine, vis-à-vis dudit porte-outils (24) dudit dispositif (43) de transfert d'outils.

2. Machine-outil selon la revendication 1, **caractérisée par le fait que** la plate-forme d'emmagasinage (18) est reliée au bâti (3) de ladite machine.

3. Machine-outil selon l'une des revendications précédentes, **caractérisée par le fait que** le magasin d'outillage (11), proche du poste, est doté d'un support horizontal d'outillage (11) qui est logé au moins en partie dans l'espace intérieur (6) du bâti (3) de ladite machine, s'étend transversalement par rapport à la direction longitudinale dudit bâti (3) de la machine et sur lequel des emplacements de stockage (14), dédiés à des outils d'usinage (15) pouvant être insérés et extraits au niveau du poste d'usinage (7), sont agencés en juxtaposition transversalement par rapport à ladite direction longitudinale du bâti (3) de la machine.

4. Machine-outil selon l'une des revendications précédentes, **caractérisée par le fait que** le magasin d'outillage (11), proche du poste, est mobile vis-à-vis du porte-outils (24) du dispositif (43) de transfert d'outils, dans la direction longitudinale du bâti (3) de ladite machine ; et **par le fait qu'**au moyen dudit magasin d'outillage (11) proche du poste, la plate-forme d'emmagasinage (18) du magasin d'outillage (40) éloigné dudit poste peut être mue vers une position de prélèvement/transfert par un mouvement de transfert d'outils, dans ladite direction longitudinale dudit bâti (3) de la machine, vis-à-vis dudit porte-outils (24) dudit dispositif (43) de transfert d'outils.

5. Machine-outil selon la revendication 4, **caractérisée par le fait que** la plate-forme d'emmagasinage (18) du magasin d'outillage (40) éloigné du poste peut être couplée au magasin d'outillage (11) proche dudit poste, de manière libérable, en vue du mouvement de transfert d'outils.

6. Machine-outil selon la revendication 5, **caractérisée par le fait que** la plate-forme d'emmagasinage (18) du magasin d'outillage (40) éloigné du poste, découplée du magasin d'outillage (11) proche dudit poste, peut être placée dans une position de repos à l'écart de la position de prélèvement/transfert.

7. Machine-outil selon l'une des revendications précédentes, **caractérisée par le fait que** le porte-outils (24) du dispositif (23, 43) de transfert d'outils est muni d'une pluralité d'organes (25, 26) de retenue d'outils, qui sont décalés les uns des autres dans la direction du mouvement de transfert d'outils.

8. Machine-outil selon l'une des revendications précédentes, **caractérisée par le fait que** le porte-outils (24) du dispositif (23, 43) de transfert d'outils peut être positionné dans le sens horizontal, perpendiculairement à la direction longitudinale du bâti (3) de ladite machine, par rapport à la plate-forme d'emmagasinage (18) du magasin d'outillage (17, 40) éloigné du poste.

9. Machine-outil selon l'une des revendications précédentes, **caractérisée par le fait que** la plate-forme d'emmagasinage (18) du magasin d'outillage (17, 40) éloigné du poste est montée, de manière remplaçable, sur une structure de support (19) dudit magasin d'outillage (17, 40) éloigné dudit poste.
